(19) Europäisches Patentamt / European Patent Office / Office européen des brevets

(11) **EP 4 310 490 A1**

(12) **EUROPEAN PATENT APPLICATION**
published in accordance with Art. 153(4) EPC

(43) Date of publication:
**24.01.2024   Bulletin 2024/04**

(21) Application number: **21931539.7**

(22) Date of filing: **17.03.2021**

(51) International Patent Classification (IPC):
***G01N 27/80*** (2006.01)

(52) Cooperative Patent Classification (CPC):
**G01N 27/80**

(86) International application number:
**PCT/JP2021/010947**

(87) International publication number:
**WO 2022/195788 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **MIYAMOTO Mitsuru**
**Tokyo 100-8071 (JP)**
• **SUZUMA Toshiyuki**
**Tokyo 100-8071 (JP)**
• **YAMADA Hirohisa**
**Tokyo 100-8071 (JP)**
• **YAMANO Masaki**
**Tokyo 100-8071 (JP)**
• **YAMAMOTO Ryuuji**
**Tokyo 100-8071 (JP)**
• **HORI Yuji**
**Tokyo 100-8071 (JP)**

(74) Representative: **J A Kemp LLP**
**80 Turnmill Street**
**London EC1M 5QU (GB)**

(54) **HARDNESS COMPUTING DEVICE, HARDNESS MEASURING SYSTEM, HARDNESS COMPUTING METHOD, AND HARDNESS COMPUTING PROGRAM**

(57)   A hardness computing device (20) computes hardness information that is information regarding hardness at a measurement position on the basis of a detection result of a current value or a voltage value detected by a detection coil (15) in response to application of a magnetic field to an object to be measured. The hardness computing device includes a feature amount calculation unit that calculates a feature amount that changes with respect to the hardness at the measurement position on the basis of the detection result detected in response to application of a first alternating magnetic field having a first frequency and a second alternating magnetic field having a second frequency lower than the first frequency to the object to be measured; and a hardness calculation unit (213) that calculates the hardness information on the basis of the feature amount.

FIG. 1

EP 4 310 490 A1

## Description

[Technical Field of the Invention]

The present invention relates to a hardness computing device, a hardness measuring system, a hardness computing method, and a hardness computing program.

[Background Art]

In recent years, sulfide stress cracking (SSC) has become a problem in steels exposed to hydrogen sulfide environments. It has been clarified that SSC occurs in surface layers of steels exposed to a sulfide such as a hydrogen sulfide with a surface layer hardened portion having hardness higher than a preset upper limit value of hardness as a starting point. Furthermore, when the strength of steels is insufficient, there are cases where fracture of the steel occurs in a surface layer of the steel with a surface layer softened portion having hardness lower than a preset lower limit value of hardness as a starting point. Therefore, a method for detecting such a surface layer hardened portion and a surface layer softened portion (hereinafter, the surface layer hardened portion and the surface layer softened portion being collectively referred to as a surface layer hardness change portion) by measuring hardness is required.

As a technique for measuring hardness of surface layers of steels, for example, there is a method for estimating hardness of steels on the basis of a plurality of electromagnetic characteristics (see Patent Document 1).

[Citation List]

[Patent Document]

[Patent Document 1]

Published Japanese Translation No. H09-507570 of the PCT International Publication

[Summary of Invention]

[Problems to be Solved by the Invention]

However, in the prior art, it was only possible to estimate the hardness on the basis of the grouping obtained from the plurality of electromagnetic characteristics. Therefore, a technique has been required in which hardness information of an object to be measured can be measured with higher accuracy.

Therefore, the present invention has been made in view of the above-described circumstances, and provides a hardness computing device, a hardness measuring system, a hardness computing method, and a hardness computing program capable of computing hardness information of an object to be measured with high accuracy.

[Means for Solving the Problem]

The inventors have measured, for steels of various kinds of steel, feature amounts that change depending on the properties of the steels, such as an electromagnetic characteristic of the surface layer of the steel, under various conditions. As a result, the inventors have found that the measured feature amounts depend not only on the hardness of the surface layer of the steel but also on the stress state or the magnetic state of the surface layer. That is, even if the hardness of the surface layers is a predetermined value, if the stress states or the like differ, the measured feature amounts differ. Even if no external force is applied to the surface layers of the steels, differences may arise in residual stress or residual magnetism in each portion of the steels due to differences in cooling conditions in the manufacturing process. Therefore, even if the surface layers have the same hardness, the measured feature amounts differ due to differences in residual stress or residual magnetism. Furthermore, the inventors have found that the correlative relationships between feature amounts, hardness, and residual stress or residual magnetism of a surface layer of a steel differ depending on the type of the measured feature amount. From these facts, the inventors have arrived at the finding that it is possible to obtain hardness information by measuring one or a plurality of types of feature amounts and on the basis of the correlative relationship between each of the one or a plurality of types of feature amounts, the hardness, and the residual stress or the residual magnetism.

On the basis of the present finding, in order to solve the above problems, the present invention employs the following means.

(1) A hardness computing device according to one aspect of the present invention is a hardness computing device that computes hardness information that is information regarding hardness at a measurement position on the basis of a detection result of at least one of a current value or a voltage value detected by a detection coil in response to application of a magnetic field to an object to be measured, the device including: a feature amount calculation unit that calculates one or a plurality of feature amounts that change with respect to the hardness at the measurement position on the basis of the detection result detected in response to application of a first alternating magnetic field having a first frequency and a second alternating magnetic field having a second frequency lower than the first frequency to the object to be measured; and a hardness calculation unit that calculates the hardness information on the basis of one or a plurality of the feature amounts.

(2) In the above (1), the feature amount may be a characteristic value capable of being calculated on the basis of at least one of a current waveform, a voltage waveform, a magnetic characteristic, or an impedance loop.

(3) In the above (1) or (2), the hardness information may be hardness of a surface layer at the measurement position of the object to be measured, the feature amount may have a correlation change region in which the feature amount changes in correlation with each of the hardness and residual stress or residual magnetism, of the object to be measured, and the hardness calculation unit may calculate, for each of a plurality of the feature amounts obtained corresponding to a type of the object to be measured in advance, the hardness of the surface layer at the measurement position, on the basis of a correlative relationship between the feature amount, the hardness of the object to be measured, and at least one of the residual stress or the residual magnetism in the correlation change region.

(4) In the above (1) or (2), the hardness information may be hardness of a surface layer at the measurement position of the object to be measured, and the feature amount may further have a dead zone region in which a value of the feature amount remains constant with respect to residual stress or residual magnetism at the measurement position.

(5) In the above (1) or (2), the hardness information may be presence or absence of a change in hardness at a second measurement position with respect to hardness at a first measurement position, the feature amount may have a correlation change region in which the feature amount changes in correlation with each of the hardness and residual stress or residual magnetism, of the object to be measured, the hardness calculation unit may be configured to calculate the hardness information on the basis of a change tendency of each of a plurality of the feature amounts calculated at each of the first measurement position and the second measurement position in the correlation change region, and a plurality of the feature amounts may include at least two of the feature amounts exhibiting the same change tendency with respect to a change in one of stress or hardness, and also exhibiting opposite change tendencies with respect to a change in the other of the stress or the hardness.

(6) In the above (1) or (2), the hardness calculation unit may calculate the hardness information on the basis of a measurement value of the feature amount at the measurement position of the object to be measured by using a trained model that has learned a correlative relationship between the feature amount and the hardness information.

(7) In any one of the above (1) to (6), the hardness calculation unit may calculate the hardness information on the basis of a plurality of the feature amounts and a chemical composition and/or a manufacturing condition of the object to be measured.

(8) A hardness measuring system according to one aspect of the present invention may include: a high frequency magnetic field applicator that applies a first alternating magnetic field having a first frequency to the object to be measured; a low frequency magnetic field applicator that applies a second alternating magnetic field having a second frequency lower than the first frequency to the object to be measured; a detection coil that detects a magnetic field, from the object to be measured, obtained when each of the first alternating magnetic field and the second alternating magnetic field is applied; a detector that detects at least one of a current value or a voltage value flowing through the detection coil; and the hardness computing device according to any one of the above (1) to (7).

(9) A hardness computing method according to one aspect of the present invention is a hardness computing method for calculating hardness information that is information regarding hardness at a measurement position on the basis of a detection result including at least one of a current value or a voltage value detected by a detection coil in response to application of a magnetic field to an object to be measured, the method including: calculating one or a plurality of feature amounts that change with respect to the hardness at the measurement position on the basis of the detection result detected in response to application of a first alternating magnetic field having a first frequency and a second alternating magnetic field having a second frequency lower than the first frequency to the object to be measured; and calculating the hardness information on the basis of one or a plurality of the feature amounts.

(10) A hardness computing program according to one aspect of the present invention is a hardness computing program for calculating hardness information that is information regarding hardness at a measurement position on the basis of a detection result including at least one of a current value or a voltage value detected by a detection coil in response to application of a magnetic field to an object to be measured, the program causing a computer to function as: a feature amount calculator that calculates one or a plurality of feature amounts that change with respect to the hardness at the measurement position on the basis of the detection result detected in response to application of a first alternating magnetic field having a first frequency and a second alternating magnetic field having a second frequency lower than the first frequency to the object to be measured; and a hardness information means that calculates the hardness information on the basis of the feature amount.

[Effects of the Invention]

According to the present invention, it is possible to provide a hardness computing device, a hardness measuring system, a hardness computing method, and a hardness computing program capable of computing hardness information of an object to be measured with high accuracy.

[Brief Description of the Drawings]

FIG. 1 is a schematic diagram illustrating a hardness measuring system.

FIG. 2A is an explanatory diagram illustrating BH loops and feature amounts indicating a relationship between strength of a magnetic field and magnetic flux density.

FIG. 2B is an explanatory diagram illustrating a detected current waveform and a detected feature amount.

FIG. 2C is an explanatory diagram illustrating a detected voltage waveform and a detected feature amount.

FIG. 2D is an explanatory diagram illustrating an alternating voltage waveform to be applied.

FIG. 2E is an explanatory diagram illustrating distortion rate represented by an amplitude normalized by a fundamental wave on the basis of the detected current waveform.

FIG. 2F is an explanatory diagram illustrating maximum amplitude and minimum amplitude of amplitude represented by a distance from the origin in an impedance loop on an impedance complex plane.

FIG. 2G is an explanatory diagram illustrating an impedance loop width at a 3% reduction of the maximum amplitude and an impedance loop width at a 10% reduction of the maximum amplitude in the impedance loop on the impedance complex plane.

FIG. 2H is an explanatory diagram illustrating a maximum phase and a minimum phase in the impedance loop on the impedance complex plane.

FIG. 2I is an explanatory diagram illustrating, in a relationship between voltage and incremental permeability, maximum incremental permeability, average incremental permeability, incremental permeability at a zero external magnetic field, a magnetization voltage at maximum incremental permeability, a magnetization voltage at 75% of the maximum incremental permeability, a magnetization voltage at 50% of the maximum incremental permeability, a magnetization voltage at 25% of the maximum incremental permeability, and asymmetry of the incremental permeability.

FIG. 3 is a block diagram illustrating hardware constituting a hardness computing device.

FIG. 4A is a diagram illustrating a pattern having a correlative relationship in which a feature amount increases as stress of a surface layer of a steel at a measurement position increases, and the feature amount decreases as hardness of the surface layer of the steel at the measurement position increases.

FIG. 4B is a diagram illustrating a pattern having a correlative relationship in which the feature amount increases as the stress increases, and the feature amount increases as the hardness increases.

FIG. 4C is a diagram illustrating a pattern having a correlative relationship in which the feature amount decreases as the stress increases, and the feature amount decreases as the hardness increases.

FIG. 4D is a diagram illustrating a pattern having a correlative relationship in which the feature amount decreases as the stress increases, and the feature amount increases as the hardness increases.

FIG. 4E is a diagram illustrating a pattern having a dead zone region in a partial stress range of the compressive stress and having, in the stress range other than the dead zone region, a correlative relationship in which the feature amount increases as the stress increases, and the feature amount increases as the hardness increases.

FIG. 4F is a diagram illustrating a pattern having a dead zone region in a partial range of the compressive stress and having, in the stress range other than the dead zone region, a correlative relationship in which the feature amount decreases as the stress increases, and the feature amount decreases as the hardness increases.

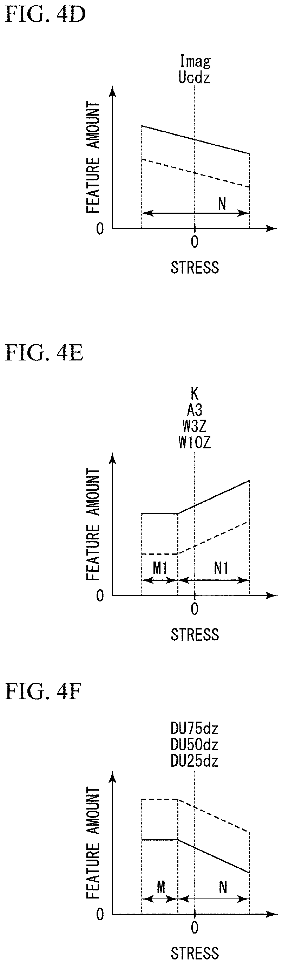

FIG. 4F is a diagram illustrating a pattern having a dead zone region in a partial stress range of the compressive stress and having, in the stress range other than the dead zone region, a correlative relationship in which the feature amount decreases as the stress increases, and the feature amount decreases as the hardness increases.

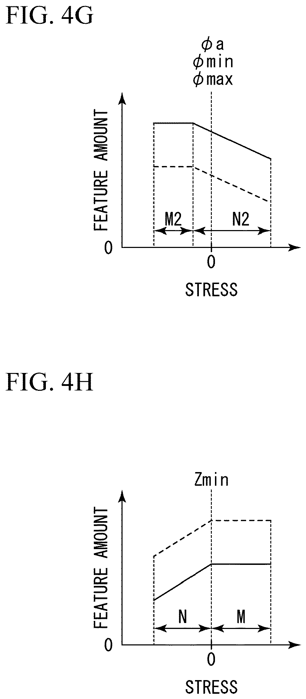

FIG. 4H is a diagram illustrating a pattern having a dead zone region in a stress range of the tensile stress and having, in the stress range other than the dead zone region, a correlative relationship in which the feature amount decreases as the stress decreases, and the feature amount decreases as the hardness increases.

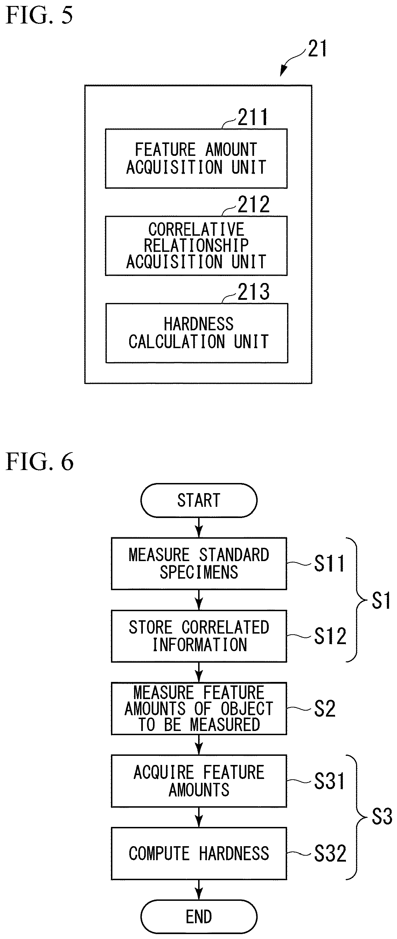

FIG. 5 is a block diagram illustrating functional units constituting the hardness computing device.

FIG. 6 is a flowchart describing a hardness computing method.

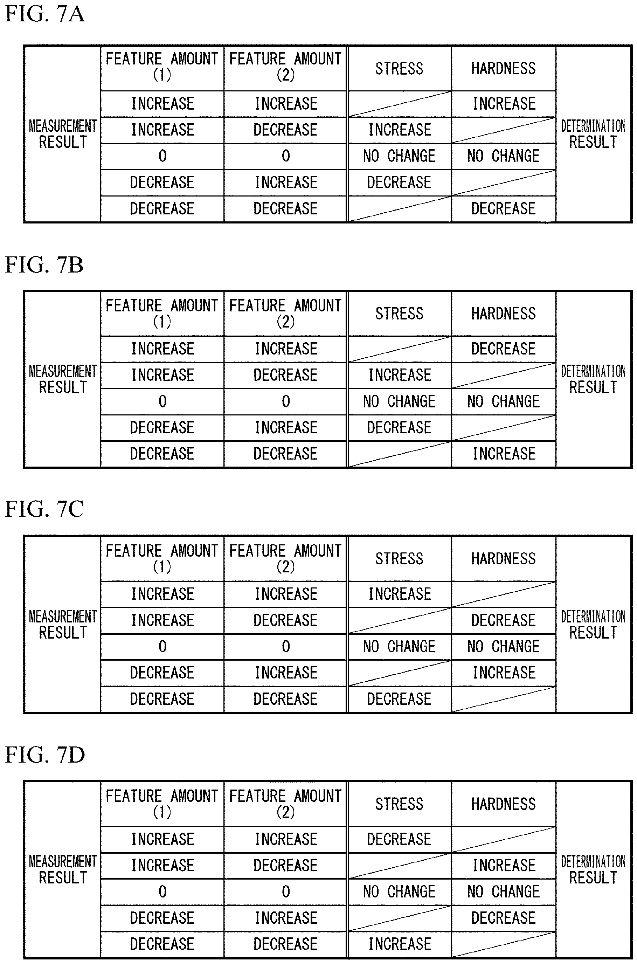

FIG. 7A is a first determination table illustrating a relationship between a combination of increase/decrease of two types of feature amounts and a change tendency (increase or decrease) of stress and hardness.

FIG. 7B is a second determination table illustrating a relationship between a combination of increase/decrease of two types of feature amounts and a change tendency (increase or decrease) of stress and hardness.

FIG. 7C is a third determination table illustrating a relationship between a combination of increase/decrease of two types of feature amounts and a change tendency (increase or decrease) of stress and hardness.

FIG. 7D is a fourth determination table illustrating a relationship between a combination of increase/decrease of two types of feature amounts and a change tendency (increase or decrease) of stress and hardness.

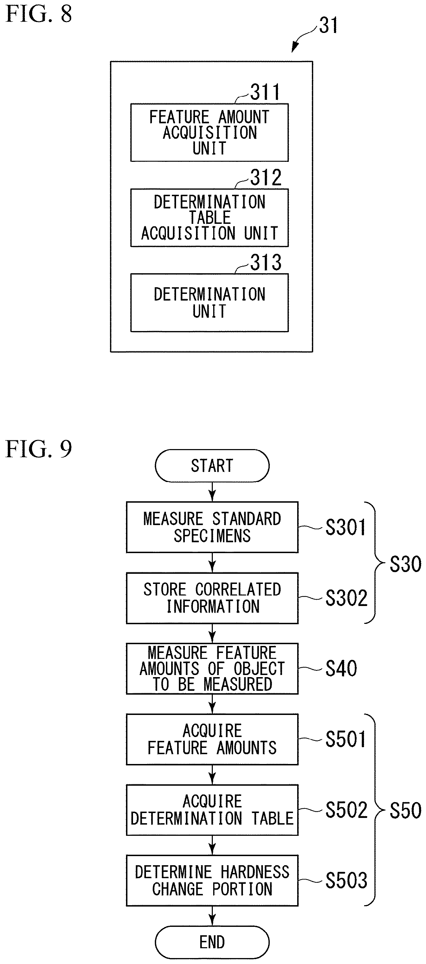

FIG. 8 is a block diagram illustrating functional constitutions of a control unit of a third embodiment.

FIG. 9 is a flowchart describing a hardness change portion detecting method of the third embodiment.

[Embodiments of the Invention]

(First Embodiment)

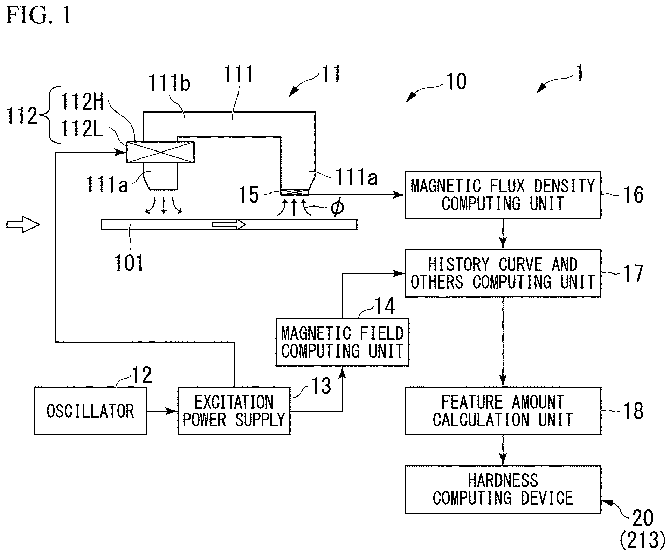

Hereinafter, a first embodiment according to the present invention will be described with reference to FIGS. 1 to 8. FIG. 1 is a schematic diagram illustrating a hardness measuring system of the present embodiment.

(Hardness measuring system)

As illustrated in FIG. 1, a hardness measuring system 1 of the first embodiment includes a feature amount measuring device 10 and a hardness computing device 20 that computes hardness information on the basis of a feature amount that changes depending on properties of a surface layer of an object to be measured (for example, a steel 101). The hardness computing device 20 computes hardness information on the basis of a detection result of at least one of a current value or a voltage value detected by a detection coil 15 in response to application of a magnetic field to an object to be measured.

Here, the hardness information is information regarding hardness at a measurement position of an object to be measured. The hardness information may be hardness of a surface layer at a measurement position of an object to be measured (the steel 101 in this case), may be a determination result of the presence or absence of a change (difference) in the hardness at a second measurement position with respect to the hardness at a first measurement position of the object to be measured, may be a determination result of whether the hardness at the measurement position of the object to be measured is within or outside a defined hardness range, or may be a determination result of whether the hardness at the measurement position of the object to be measured is higher or lower than a reference hardness.

Note that the hardness includes hardness quantified by various tests. Examples of the hardness include Vickers hardness by a Vickers hardness test, Brinell hardness by a Brinell hardness test, Knoop hardness by a Knoop hardness test, Rockwell hardness by a Rockwell hardness test, and the like, which are defined by international standards, Japanese Industrial Standards, or the like. Furthermore, these types of hardness do not necessarily have to be values measured by a test method for measuring each hardness. If a correlative relationship is known in advance, a measurement value may be obtained on the basis of a result measured by a rebound testing machine, and a measurement value itself obtained by a rebound test may be used as an index of the hardness. Hereinafter, an example will be described in which Vickers hardness is measured. Note that Vickers hardness is simply referred to as hardness hereinafter.

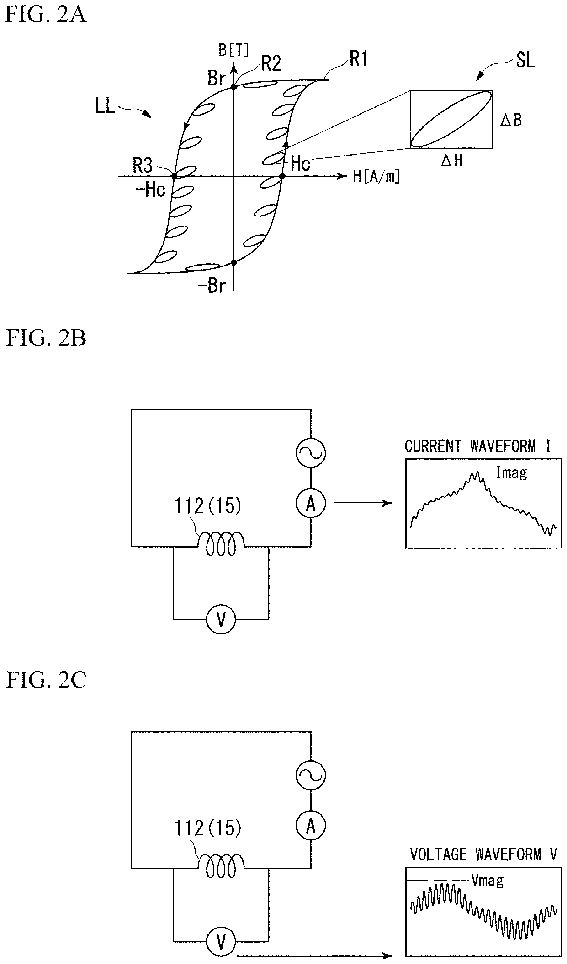

Furthermore, the hardness measuring system 1 includes a high frequency magnetic field applicator (high frequency exciting coil 112H) that applies a first alternating magnetic field having a first frequency to an object to be measured, a low frequency magnetic field applicator (low frequency exciting coil 112L) that applies a second alternating magnetic field having a second frequency lower than the first frequency to the object to be measured, the detection coil 15 that detects a magnetic field, from the object to be measured, obtained when each of the first alternating magnetic field and the second alternating magnetic field is applied, and a detector (for example, an ammeter, a voltmeter, and the like not illustrated) that detects at least one of a current value or a voltage value flowing through the detection coil 15. In this manner, by magnetizing an object to be measured with a magnetic field in which a high frequency and a low frequency are superimposed, for example, a curve is obtained in which small loops SL, which are a plurality of small BH loops corresponding to the first frequency, are superimposed on a large loop LL, which is a large BH loop corresponding to the second frequency, as illustrated in FIG. 2A. Accordingly, diverse magnetism can be detected as compared with a case where an alternating magnetic field of a single frequency is applied. Therefore, it is possible to detect an appropriate feature amount of an object to be measured for computing the hardness information with high accuracy.

The feature amount includes, for example, a feature amount that changes under an influence of properties of a surface layer of an object to be measured, such as the steel 101, including a magnetic body, when a magnetic field is applied to the surface layer of the object to be measured. The feature amount may be a characteristic value capable of being calculated on the basis of at least one of a current waveform, a voltage waveform, a magnetic characteristic, or an impedance loop. Note that there is a case where the feature amount is referred to as an electromagnetic characteristic.

Hereinafter, a case will be described in which an object to be measured is the steel 101 and the feature amount is an electromagnetic characteristic of the surface layer of the steel 101.

(Feature amount measuring device)

As illustrated in FIG. 1, the feature amount measuring device 10 is a device that measures feature amounts obtained from BH loops and the like of the steel 101, for example. The feature amounts will be described later. Note that the BH loop is a magnetic characteristic curve indicating a relationship between strength H of a magnetic field periodically applied to the surface layer of the steel 101 and magnetic flux density B generated in the surface layer of the steel 101 by the applied magnetic field. The feature amount measuring device 10 includes a magnetizer 11, an oscillator 12, an excitation power supply 13, a magnetic field computing unit 14, the detection coil 15, a magnetic flux density computing unit 16, a history curve and others computing unit 17, and a feature amount calculation unit 18.

The magnetizer 11 includes a yoke 111 and an exciting coil 112. The exciting coil 112 includes the high frequency exciting coil 112H that applies the first alternating magnetic field having the first frequency to the steel 101 (object to be measured) and the low frequency exciting coil 112L that applies the second alternating magnetic field having the second frequency lower than the first frequency to the steel 101 (object to be measured). Note that the high frequency exciting coil 112H and the low frequency exciting coil 112L may be different coils, or a single coil may serve as both the high frequency exciting coil 112H and the low frequency exciting coil 112L.

Note that the exciting coil 112 may serve as the detection coil 15 described later. In this case, the exciting coil 112 can apply an alternating current from the excitation power supply 13 and detect an induction current and voltage that are generated in response to the change in magnetic flux $\Phi$.

The yoke 111 having a U shape includes a body portion 111b and a pair of core portions 111a formed at both ends of the body portion 111b. The pair of core portions 111a is disposed such that distal end surfaces serving as magnetic poles face the surface of the surface layer of the steel 101 that is an object to be measured. The exciting coil 112 is coiled around each of the core portions 111a. Note that in a case where the high frequency exciting coil 112H and the low frequency exciting coil 112L are different coils, the high frequency exciting coil 112H may be in a state of being coiled around one of the core portions 111a and the low frequency exciting coil 112L may not be coiled around the yoke 111 but may serve as a probe (not illustrated) disposed in a space between the yoke 111 and the steel 101. The arrangement of the high frequency exciting coil 112H and the low frequency exciting coil 112L may be the opposite of the arrangement described above. In a case where the high frequency exciting coil 112H and the low frequency exciting coil 112L are different coils, either the high frequency exciting coil 112H or the low frequency exciting coil 112L may serve as the detection coil 15, or both the high frequency exciting coil 112H and the low frequency exciting coil 112L may serve as the detection coil 15.

With such a constitution, the yoke 111 can generate, by an alternating current flowing through the exciting coil 112, a magnetic field having the strength H proportional to the magnitude of the alternating current, on the surface layer of the steel 101 disposed at a position facing the core portions 111a. Furthermore, the exciting coil 112 includes the high frequency exciting coil 112H and the low frequency exciting coil 112L, and thus can generate alternating magnetic fields with different frequencies on the surface layer of the object to be measured. Accordingly, diverse feature amounts that serve as bases for computing hardness information and have high correlation between the hardness information and residual stress or residual magnetism (hereinafter, in some cases, simply referred to as "stress") can be acquired. Therefore, the hardness information can be computed with high accuracy.

The oscillator 12 outputs a signal of a frequency corresponding to the frequency of an objective alternating current. Here, the oscillator 12 outputs a sinusoidal waveform signal in which the second frequency lower than the first frequency is superimposed on the first frequency, in order to apply the first alternating magnetic field having the first frequency and the second alternating magnetic field having the second frequency lower than the first frequency to the steel material 101. In this manner, the oscillator 12 outputs a sinusoidal waveform signal obtained by superimposing the second frequency lower than the first frequency on the first frequency. Therefore, diverse current waveforms, voltage waveforms, magnetic characteristics, impedance loops, or the like can be obtained, and various feature amounts capable of being calculated of the basis of them can be obtained, and feature amounts having high correlation with hardness information and stress can be detected. Accordingly, the hardness can be computed with high accuracy.

The excitation power supply 13 outputs an alternating current corresponding to the frequency of the signal received from the oscillator 12 to the exciting coil 112. Furthermore, the excitation power supply 13 can set the magnitude of the alternating current to be output, that is, the amplitude of the alternating current.

The magnetic field computing unit 14 detects the magnitude of the alternating current output from the excitation power supply 13 to the exciting coil 112, and computes the strength H of the magnetic field generated on the surface layer of the steel 101 on the basis of the magnitude of the detected alternating current, the number of turns of the exciting coil 112 stored in advance, and the like. The magnetic field computing unit 14 outputs the computed strength H of the magnetic field to the history curve and others computing unit 17.

The detection coil 15 detects a magnetic flux $\Phi$ generated in the steel 101. The detection coil 15 may include an ammeter or a voltmeter that detects a current or a voltage of a circuit connected to the detection coil 15. The ammeter is provided in series with the detection coil 15. The voltmeter is provided in parallel to the detection coil 15.

For example, detection coil 15 is coiled around at least one of distal end portions of the pair of core portions 111a so as to surround the distal end surface serving as a magnetic pole. The magnetic flux Φ generated in a gap between the magnetic pole and the surface of the steel 101 changes depending on the magnetic field generated by the magnetizer 11 and the state of the surface layer of the steel 101. Then, in the detection coil 15, a current and a voltage are generated by electromagnetic induction in response to change with time in the magnetic flux Φ.

Note that, as described above, the exciting coil 112 may serve as the detection coil 15. In this case, the exciting coil 112 serving as the detection coil 15 may be coiled alone around either one of the distal end portions of the pair of core portions 111a. That is, the exciting coil 112 serving as both the function of applying an alternating magnetic field and the function of detecting an induction current or voltage may be provided alone on either one of the distal end portions of the pair of core portions 111a.

The magnetic flux density computing unit 16 computes the magnetic flux density B on the basis of the current or the voltage that is detected by the detection coil 15, the number of turns of the detection coil 15 obtained in advance, a cross-sectional area of the detection coil 15, and the like. The magnetic flux density computing unit 16 outputs the computed magnetic flux density B to the history curve and others computing unit 17.

The history curve and others computing unit 17 computes, on the basis of the current or the voltage that is detected by the detection coil 15, a history curve and others (see FIGS. 2A to 2I), for example, a current waveform, a voltage waveform, a magnetic characteristic, and an impedance loop, serving as bases for computing feature amounts.

The history curve and others computing unit 17 computes a BH loop that represents a magnetic characteristic and indicates a relationship between the strength H of a magnetic field and the magnetic flux density B, on the basis of the strength H of the magnetic field output from the magnetic field computing unit 14 and the magnetic flux density B output from the magnetic flux density computing unit 16, for example. Furthermore, the history curve and others computing unit 17 computes a history curve and others such as a current waveform, a voltage waveform, and an impedance loop, on the basis of the current or the voltage that is detected by the detection coil 15, for example.

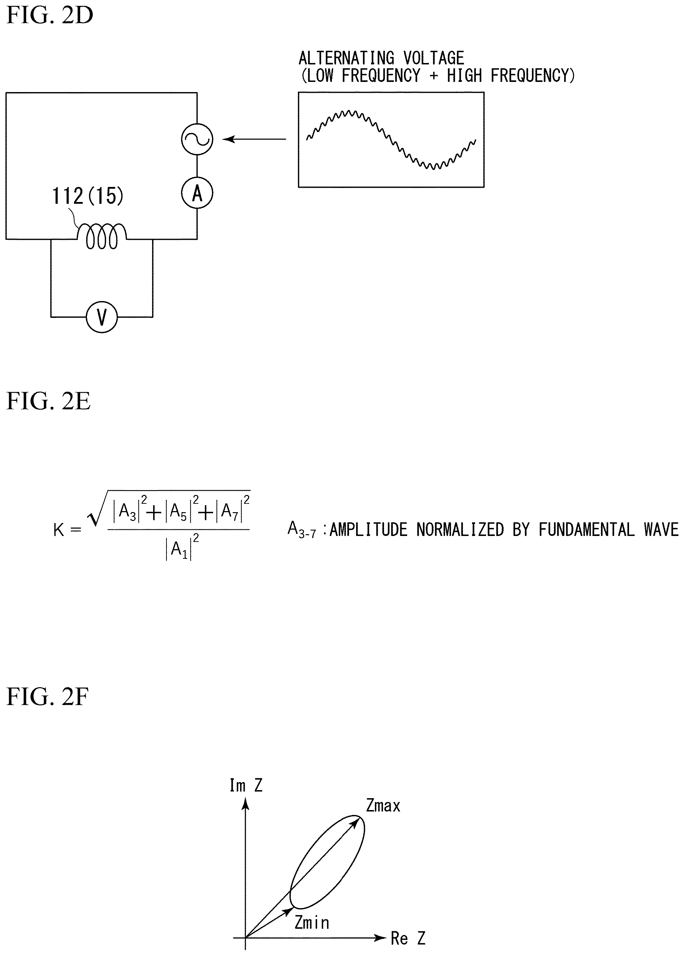

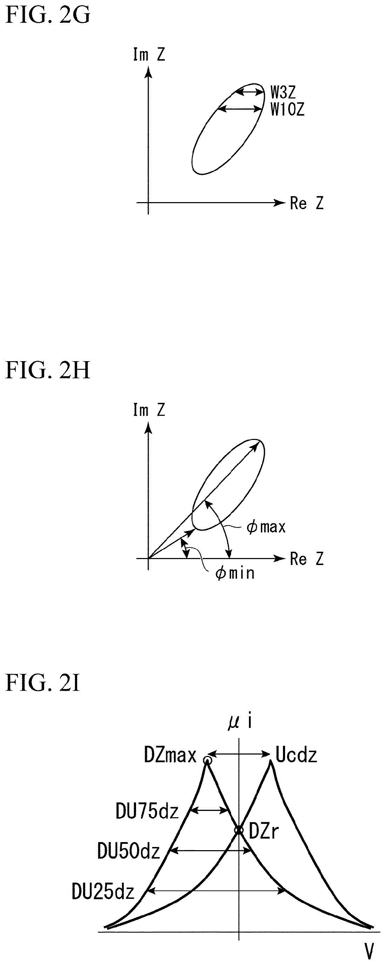

FIGS. 2A to 2I are schematic diagrams of feature amounts. FIGS. 2A to 2I illustrate examples of a current waveform, a voltage waveform, a magnetic characteristic, and an impedance loop that are computed by the history curve and others computing unit 17 on the basis of the detected current or voltage. FIG. 2A is an explanatory diagram illustrating BH loops and feature amounts indicating a relationship between the strength H of a magnetic field and the magnetic flux density B. FIG. 2B is an explanatory diagram illustrating a detected current waveform and a detected feature amount. As described above, a curve is obtained in which the small loops SL, which are a plurality of small BH loops corresponding to the first frequency, are superimposed on the large loop LL, which is a large BH loop corresponding to the second frequency lower than the first frequency. The average rate of change of the small loop SL is defined as the incremental permeability $\mu i = \Delta B / \Delta H$ (where i denotes the small loop here). A maximum magnetization current Imag (A), a third-order harmonic amplitude A3 (%), and a third-order harmonic phase P3 (rad) are obtained from the current waveform illustrated in FIG. 2B. FIG. 2C is an explanatory diagram illustrating a detected voltage waveform and a detected feature amount. A maximum magnetization voltage Vmag (V) is obtained from the voltage waveform illustrated in FIG. 2C. FIG. 2D is an explanatory diagram illustrating an alternating voltage waveform to be applied. FIG. 2E is an explanatory diagram illustrating a distortion rate K (%) represented by an amplitude normalized by a fundamental wave on the basis of the detected current waveform. Note that, in FIG. 2E, A1 indicates the amplitude of the fundamental wave, A3 indicates the amplitude of a third harmonic, A5 indicates the amplitude of a fifth harmonic, and A7 indicates the amplitude of a seventh harmonic. FIGS. 2F to 2H are plots of high frequency impedance obtained from a local region of the waveform in FIG. 2D, spanning one cycle of the low frequency. FIG. 2F is an explanatory diagram illustrating maximum amplitude Zmax (Ω) and minimum amplitude Zmin (Ω) of amplitude represented by a distance from the origin in an impedance loop on an impedance complex plane. Note that average amplitude Zmean (Ω) obtained by averaging the amplitude represented by the distance from the origin with a loop may be derived from FIG. 2F. FIG. 2G is an explanatory diagram illustrating an impedance loop width W3Z (Ω) at a 3% reduction of the maximum amplitude Zmax and an impedance loop width W10Z (Ω) at a 10% reduction of the maximum amplitude Zmax in the impedance loop on the impedance complex plane. FIG. 2H is an explanatory diagram illustrating a maximum phase φmax (rad) and a minimum phase φmin (rad) in the impedance loop on the impedance complex plane. Note that an average phase φa (rad) obtained by averaging the phase with a loop may be derived on the basis of FIG. 2H. FIG. 2I is an explanatory diagram illustrating, in a relationship between the voltage V and incremental permeability $\mu i (= \Delta B / \Delta H)$, maximum incremental permeability DZmax (Ω), average incremental permeability DZmean (Ω), which is an average value of the voltage of one peak of the magnetic characteristic curve, incremental permeability DZr (Ω) at a zero external magnetic field, a magnetization voltage Ucdz (V) at maximum incremental permeability, a magnetization voltage DU75dz (V) at 75% of the maximum incremental permeability, a magnetization voltage DU50dz (V) at 50% of the maximum incremental permeability, a magnetization voltage DU25dz (V) at 25% of the maximum incremental permeability, and asymmetry Rem (%) of the incremental permeability representing the asymmetry of two peaks of the magnetic characteristic curve.

Feature amounts, of the surface layer of the steel 101 that is an object to be measured, can be obtained from such a history curve and others, that is, a current waveform, a voltage waveform, a magnetic characteristic, and an impedance loop, serving as bases for computing the feature amount.

Specifically, as illustrated in FIG. 2A, examples of the feature amount include residual magnetic flux density Br, coercive force He, permeability $\mu$, and the like. The residual magnetic flux density Br is the magnetic flux density B at a point R2, where the strength H of the magnetic field is reduced to zero from a point R1, where the strength H of the magnetic field is maximum in the large loop LL. The coercive force He indicates the strength H of the magnetic field at a point R3, where the direction of the magnetic field is further reversed and the magnetic flux density B becomes zero. The permeability $\mu$ indicates a gradient of the large loop curve in the strength H of an arbitrary magnetic field, that is, a change rate of a change amount $\Delta B$ of the magnetic flux density B with respect to a change amount $\Delta H$ of the strength H of the magnetic field.

Furthermore, the feature amount is not limited to the residual magnetic flux density Br, the coercive force He, and the permeability $\mu$, as long as the feature amount is detected in response to the change in strength of the magnetic field. As illustrated in FIGS. 2B to 2I, for example, the feature amount may be a characteristic value capable of being calculated on the basis of any of a current waveform, a voltage waveform, a magnetic characteristic, or an impedance loop, which are detected and computed by the magnetic flux density computing unit 16.

The feature amount calculation unit 18 calculates one or a plurality of feature amounts that change with respect to the hardness at a measurement position. The feature amount calculation unit 18 may extract a plurality of types of feature amounts from the history curves such as BH loops and impedance loops computed by the history curve and others computing unit 17. In the first embodiment, the feature amount calculation unit 18 extracts the residual magnetic flux density Br and the coercive force Hc from the BH loop, for example. However, the present invention is not limited thereto, and the feature amount calculation unit 18 may detect only one type of another feature amount instead of the residual magnetic flux density Br and the coercive force He, may detect two types of feature amounts of different combinations, or may detect three or more types of feature amounts. The feature amount calculation unit 18 outputs the extracted one or a plurality of types of feature amounts to the hardness computing device 20.

(Hardness computing device)

Next, the hardness computing device 20 will be described.

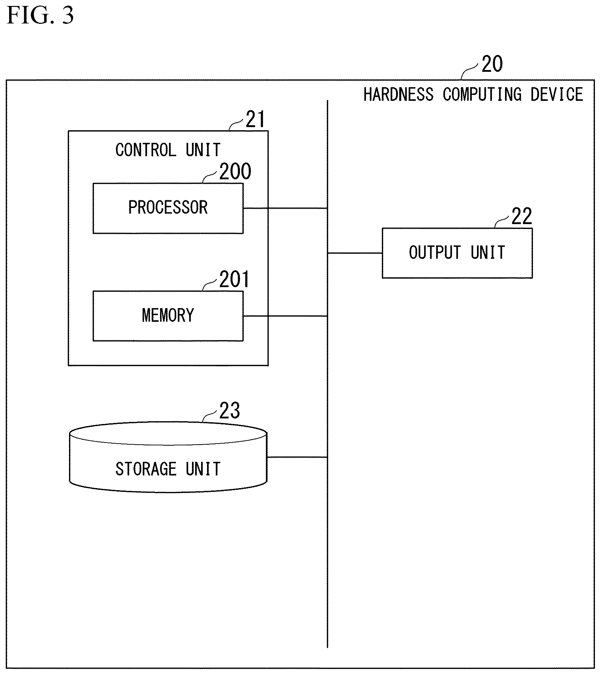

FIG. 3 is a block diagram illustrating hardware constituting the hardness computing device 20 of the first embodiment.

As illustrated in FIG. 3, the hardness computing device 20 includes a control unit 21 including a processor 200 such as a central processing unit (CPU) and a memory 201, which are connected via a bus. The hardness computing device 20 executes a program. The hardness computing device 20 functions as a device including the control unit 21, an output unit 22, and a storage unit 23, by executing the program. Note that all or some of the functions of the hardness computing device 20 may be achieved by using hardware such as an application specific integrated circuit (ASIC), a programmable logic device (PLD), or a field programmable gate array (FPGA). The program may be recorded in a computer-readable recording medium. The program may be recorded in the memory 201. The computer-readable recording medium is, for example, a portable medium such as a flexible disk, a magneto-optical disk, a ROM, or a CD-ROM, or a storage device such as a hard disk embedded in a computer system. The program may be transmitted via a telecommunication line.

The output unit 22 outputs various types of information. The output unit 22 outputs hardness at an arbitrary position on the surface of the steel 101 measured by the feature amount measuring device 10, for example. The output unit 22 may acquire position information in the steel 101, and may display the position information and information regarding the hardness in association with each other. Furthermore, the output unit 22 may visually represent the information regarding the hardness by a numerical value or a color on a plane representing the steel 101 on the basis of the position information and the hardness. The output unit 22 is constituted by including, for example, a display device such as a cathode ray tube (CRT) display, a liquid crystal display, or an organic electro-luminescence (EL) display. The output unit 22 may be constituted as an interface that connects these display devices to its own device.

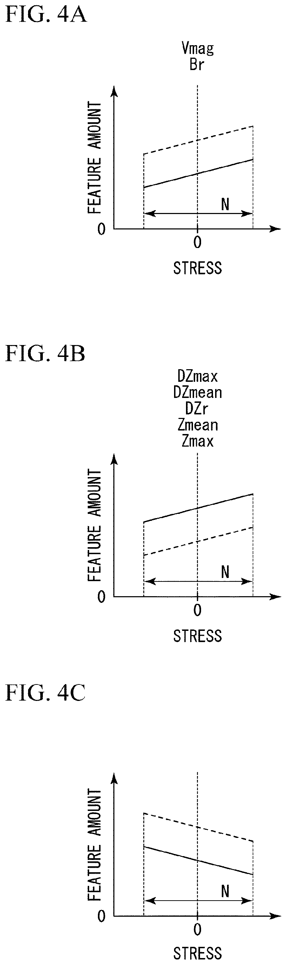

The storage unit 23 is constituted by using a storage device such as a magnetic hard disk device or a semiconductor storage device. The storage unit 23 stores various types of information regarding the feature amount measuring device 10. The storage unit 23 stores, for example, a correlative relationship between each of a plurality of types of feature amounts measured by the feature amount measuring device 10 and hardness and stress (for example, patterns illustrated in FIGS. 4A to 4H and determination tables illustrated in FIGS. 7A to 7D). Details of the correlative relationship between the feature amounts, the hardness, and the stress will be described below.

FIGS. 4A to 4H are graphs schematically exemplifying patterns of correlative relationships between feature amounts, stress (residual stress or residual magnetism), and hardness, which are used in the hardness computing device 20 of the first embodiment. Note that FIGS. 4A to 4H are graphs schematically exemplifying patterns of correlative relationships between feature amounts, residual stress, and hardness, but instead of these patterns, schematically exemplified patterns of correlative relationships between feature amounts, residual magnetism, and hardness can be similarly obtained.

In the graphs in FIGS. 4A to 4H, the horizontal axis represents the stress of a surface layer of a steel at a portion where the measurement is performed, and the vertical axis represents the magnitude of the target feature amount. The graphs in FIGS. 4A to 4H illustrate relationships between stress and feature amounts while changing the hardness. In FIGS. 4A to 4H, the stress is represented as a positive value for tensile stress and a negative value for compressive stress. In each graph in FIGS. 4A to 4H, the type of hardness is illustrated by two types of hardness, indicated by a solid line representing high hardness and by a dotted line representing low hardness. However, the present invention is not limited thereto, and three or more types of hardness may be illustrated. By increasing the number of types of hardness illustrated in each graph, reliability of the constants $a_i$, and $b_i$ used in expression (5) to be described later is increased, and the hardness can be accurately estimated.

Patterns illustrated in FIGS. 4A, 4B, 4C, and 4D each represent a tendency of a monotonic increase or a monotonic decrease.

The pattern illustrated in FIG. 4A has a correlative relationship in which the feature amount increases as the stress of the surface layer of the steel at the measurement position increases, and the feature amount decreases as the hardness of the surface layer of the steel at the measurement position increases. Examples of the feature amount corresponding to the pattern illustrated in FIG. 4A include the maximum magnetization voltage Vmag, the residual magnetic flux density Br, and the like.

The pattern illustrated in FIG. 4B has a correlative relationship in which the feature amount increases as the stress increases, and the feature amount increases as the hardness increases. Examples of the feature amount corresponding to the pattern illustrated in FIG. 4B include the maximum incremental permeability DZmax, the average incremental permeability DZmean, the incremental permeability DZr, the average amplitude Zmean, the maximum amplitude Zmax, and the like.

The pattern illustrated in FIG. 4C has a correlative relationship in which the feature amount decreases as the stress increases, and the feature amount decreases as the hardness increases.

The pattern illustrated in FIG. 4D has a correlative relationship in which the feature amount decreases as the stress increases, and the feature amount increases as the hardness increases. Examples of the feature amount corresponding to the pattern illustrated in FIG.

4D include the maximum magnetization current Imag, the magnetization voltage Ucdz at maximum incremental permeability, and the like.

On the other hand, patterns illustrated in FIGS. 4E, 4F, 4G, and 4H represent patterns in each of which a feature amount remains approximately constant with respect to the stress in a partial stress range.

The pattern illustrated in FIG. 4E has a dead zone region (a region in which the feature amount remains approximately constant or at an equivalent level even when the stress changes, the same applies hereinafter) M1 in a partial stress range of the compressive stress. In addition, in the stress range other than the dead zone region M1, the pattern illustrated in FIG. 4E has a correlative relationship in which the feature amount increases as the stress increases, and the feature amount increases as the hardness increases. Examples of the feature amount corresponding to the pattern illustrated in FIG. 4E include the distortion rate K, the third-order harmonic amplitude A3, the impedance loop width W3Z at a 3% reduction of the maximum amplitude Zmax, the impedance loop width W10Z at a 10% reduction of the maximum amplitude Zmax, and the like.

The pattern illustrated in FIG. 4F has a dead zone region M in a partial stress range of compressive stress. In addition, in the stress range other than the dead zone region M, the pattern illustrated in FIG. 4F has a correlative relationship in which the feature amount decreases as the stress increases, and the feature amount decreases as the hardness increases. Examples of the feature amount corresponding to the pattern illustrated in FIG. 4F include the magnetization voltage DU75dz at 75% of the maximum incremental permeability, the magnetization voltage DU50dz at 50% of the maximum incremental permeability, the magnetization voltage DU25dz at 25% of the maximum incremental permeability, and the like.

The pattern illustrated in FIG. 4G has a dead zone region M2 in a partial stress range of the compressive stress. In addition, in the stress range other than the dead zone region M2, the pattern illustrated in FIG. 4G has a correlative relationship in which the feature amount decreases as the stress increases, and the feature amount increases as the hardness increases. Examples of the feature amount corresponding to the pattern illustrated in FIG. 4G include the average phase $\varphi a$, the minimum phase $\varphi min$, the maximum phase $\varphi max$, and the like.

The pattern illustrated in FIG. 4H has a dead zone region M in a stress range of the tensile stress. In addition, in the stress range other than the dead zone region M, the pattern illustrated in FIG. 4H has a correlative relationship in which the feature amount decreases as the stress decreases, and the feature amount decreases as the hardness increases. Examples of the feature amount corresponding to the pattern illustrated in FIG. 4H include the minimum amplitude Zmin and the like.

As illustrated in FIGS. 4A to 4H, there is a case where the patterns of the correlative relationships between the feature amounts, stress, and hardness have different relationships for each feature amount (electromagnetic characteristic). Therefore, it is necessary to confirm the pattern of the correlative relationship between the feature amount, stress, and hardness for each feature amount. Note that the pattern of the correlative relationship is not limited to the patterns illustrated in FIGS. 4A to 4H, and there are various patterns depending on the absence of the change in feature amount, the presence of a stress range in which a feature amount is at an equivalent level, the degree of inclination, and the like. Furthermore, there is a case where the pattern has a curvedshaped correlative relationship illustrated by a quadratic curve, an inversely proportional curve, or the like instead of a combination of linear-shaped correlative relationships as illustrated in FIGS. 4A to 4H.

The correlative relationships between the feature amounts, the stress, and the hardness illustrated in FIGS. 4A to 4H are expressed by expression (3) as follows.

$$P_i = f_i(\sigma, Hv) \cdots (3)$$

where

i: a reference indicating the type of each feature amount,
$f_i$: a function indicating a correlative relationship,
$P_i$: each feature amount,
$\sigma$: stress at each measurement position of the feature amount, and
Hv: hardness at each position where the feature amount is measured.

Here, each feature amount has a correlation change region N (N1, N2) in which the feature amount changes in correlation with each of the hardness and residual stress or residual magnetism, of the object to be measured. The correlation change region N is a region in which a feature amount monotonically increases or decreases with respect to the hardness of the object to be measured and with respect to the residual stress or the residual magnetism of the object to be measured. For example, FIGS. 4A, 4B, 4C, and 4D each illustrate a feature amount that has a correlation change region N in which the feature amount changes in correlation with each of the hardness and the stress of the object to be measured, in the entire region. For example, FIGS. 4E, 4F, 4G, and 4H each illustrate a feature amount that has a correlation change region N in which the feature amount changes in correlation with each of the hardness and the stress of the object to be measured, in a partial region of the stress.

For example, in a case where the pattern represents a linear-shaped correlative relationship as illustrated in FIGS. 4A, 4B, 4C, and 4D, functions that express the correlative relationship between the feature amount, the stress, and the hardness are expressed by the following expressions (4) and (5) as follows.

$$P_i = \alpha_i \cdot \sigma + \beta_i \cdots (4)$$

$$\beta_i = a_i \cdot Hv + b_i \cdots (5)$$

where

i: a reference indicating the type of feature amount,
$P_i$: each feature amount,
$\alpha_i, a_i, b_i$: constants obtained for each feature amount,
$\sigma$: stress at each position where the feature amount is measured, and
Hv: hardness at each position where the feature amount is measured.

Note that, as illustrated in FIGS. 4E, 4F, 4G, and 4H, in a case where the correlative relationships differ depending on the stress range, expressions that express correlative relationships different for each stress range may be set under the stress range as a condition. Similarly, in a case where the correlative relationships differ depending on the hardness range, expressions that express correlative relationships different for each hardness range may be set under the hardness range as a condition. Such a correlative relationship illustrated for each type of feature amount can be obtained by preparing standard specimens, of the same kind of steel, having different stress states and hardness in advance, and by measuring feature amounts for each of the standard specimens. Here, the standard specimens of the same kind of steel refer to steels that have the same composition as the target steel and have the same thickness manufactured under the same manufacturing condition. Details will be described in a preparation step to be described later. The correlated information indicating the correlative relationship for each type of feature amount as described above is stored in the storage unit 23. For example, in the first embodiment, correlated information indicating the respective correlative relationships regarding a plurality of types of feature amounts is stored in the storage unit 23 in the form of expressions (4) and (5). Note that the stored information is not limited thereto, and a relational expression other than linear expressions may be stored in the form of expression (3), or graphs illustrated in FIGS. 4A to 4H may be constituted and stored as a set of numerical values illustrated in a table format.

Next, an example of functional units constituting the control unit 21 will be described.

FIG. 5 is a block diagram illustrating functional units constituting the hardness computing device 20.

As illustrated in FIG. 5, the control unit 21 includes a feature amount acquisition unit 211, a correlative relationship acquisition unit 212, and a hardness calculation unit 213.

The feature amount acquisition unit 211 acquires a plurality of types of feature amounts output from the feature amount calculation unit 18 for each unit of measurement (for each measurement at the same measurement position) by the feature amount measuring device 10. For example, the feature amount acquisition unit 211 acquires the residual magnetic flux density Br and the coercive force Hc.

The correlative relationship acquisition unit 212 acquires correlated information corresponding to the type of the feature amount acquired by the feature amount acquisition unit 211.

The hardness calculation unit 213 calculates hardness information on the basis of the one or a plurality of feature amounts calculated by the feature amount calculation unit 18. The hardness calculation unit 213 may calculate hardness information on the basis of the one or a plurality of feature amounts acquired by the feature amount acquisition unit 211 and the correlated information acquired corresponding to the types of the feature amounts by the correlative relationship acquisition unit 212. The hardness calculation unit 213 may calculate hardness information on the basis of the plurality of types of the feature amounts acquired by the feature amount acquisition unit 211 and the correlated information acquired corresponding to the types of the feature amounts by the correlative relationship acquisition unit 212.

As expressed by the above expression (3) or expressions (4) and (5), if the unknowns to be obtained are two of hardness Hv and stress σ, the hardness Hv is obtained by using a plurality of types of feature amounts, for example, two feature amounts of the residual magnetic flux density Br and the coercive force He, with these relational expressions regarding the unknowns.

The control unit 21 outputs the obtained hardness Hv to the output unit 22. Note that the control unit 21 may collectively execute, not only the case of acquiring the feature amounts from the feature amount measuring device 10 and computing the hardness, but also preprocessing of acquiring the feature amounts, for example, processing executed by the feature amount calculation unit 18, processing executed by the history curve and others computing unit 17, and the like, in place of the feature amount measuring device 10.

The correlative relationship acquisition unit 212 may acquire the correlated information stratified according to the type of object to be measured (for example, the kind of steel), corresponding to the type of object to be measured. The hardness calculation unit may use the measured feature amounts to calculate hardness of the surface layer at the measurement position. This makes it possible to eliminate the differences in the types of objects to be measured that affect the calculation of hardness.

The hardness calculation unit 213 may calculate the hardness information on the basis of a chemical composition and/or a manufacturing condition of the object to be measured, in addition to one or a plurality of feature amounts. This allows for even more accurate calculation.

(Hardness computing method)

Next, a hardness computing method of the first embodiment performed by the hardness measuring system 1 will be described. FIG. 6 illustrates a flow of the hardness computing method of the first embodiment.

The hardness computing method of the first embodiment is for calculating hardness information that is information regarding hardness at a measurement position on the basis of a detection result including at least one of a current value or a voltage value detected by the detection coil 15 in response to application of a magnetic field to an object to be measured.

The hardness computing method includes: calculating one or a plurality of feature amounts that change with respect to the hardness at the measurement position on the basis of the detection result detected in response to application of a first alternating magnetic field having a first frequency and a second alternating magnetic field having a second frequency lower than the first frequency to the object to be measured; and calculating the hardness information on the basis of one or a plurality of the feature amounts. This makes it possible to compute the hardness information of the object to be measured with high accuracy.

Specifically, as illustrated in FIG. 6, the hardness computing method of the first embodiment includes preparation step S1, feature amount measuring step S2, and hardness acquiring step S3. Preparation step S1 includes standard specimen measuring step S11 and correlated information storage step S12.

In standard specimen measuring step S11, a plurality of standard specimens of the same kind of steel as the steel 101 that is an object to be measured are prepared, each with stress σ and hardness Hv of the surface layer known in advance. These standard specimens are prepared to have different stress σ or hardness Hv. In order to make the hardness Hv different for each standard specimen, for example, it can be achieved by performing heating and cooling of the material from which the standard specimens are cut out and making the states of the fine structures different. By measuring the hardness Hv of the plurality of standard specimens having different fine structure states in this manner by the Vickers hardness test, standard specimens with known different values of hardness Hv can be obtained. The stress states of these standard specimens having different hardness Hv are further made different from each other. A method for making the stress states different can be achieved by, for example, installing each standard specimen in a testing machine capable of applying an external force and generating a predetermined compressive stress or tensile stress (residual stress).

Then, in standard specimen measuring step S11, each type of feature amount is measured for the respective surface layers of the prepared standard specimens. The method for measuring feature amounts is the same as feature amount measuring step S2 to be described later and hence, the description thereof is omitted.

In correlated information storage step S12, a correlative relationship between each feature amount and stress and hardness is acquired on the basis of the feature amounts, the stress, and the hardness of each standard specimen obtained in standard specimen measuring step S11. The correlative relationship is expressed by a set of numerical values in a table format, representing expressions (3), (4), and (5), or the graphs illustrated in FIGS. 4A to 4H.

Moreover, in correlated information storage step S12, a feature amount having a correlative relationship in which the change amount of the feature amount with respect to the change in stress is constant in any hardness is extracted from the acquired correlative relationship between each feature amount and stress and hardness. The correlative relationship in which the change amount of the feature amount with respect to the change in stress is constant in any hardness is a relationship illustrated in FIGS. 4A, 4B, 4C, and 4D, for example. Note that even a feature amount has a correlative relationship as illustrated in FIGS. 4E, 4F, 4G, and 4H, in a case where the stress of the steel is included in a range where the change amount of the feature amount with respect to the change in stress is constant in any hardness, the feature amount may be extracted as a feature amount having a correlative relationship in which the change amount of the feature amount with respect to the change in stress is constant in any hardness.

Then, in correlated information storage step S12, correlated information that represents a correlative relationship between the type of feature amount and stress or hardness is stored in the storage unit 23.

In feature amount measuring step S2, the feature amount measuring device 10 measures feature amounts of the surface layer at each measurement position on the surface of the steel 101 that is an object to be measured. Specifically, the excitation power supply 13 supplies an alternating current to generate a magnetic field including the first alternating magnetic field having the first frequency and the second alternating magnetic field having the second frequency lower than the first frequency. In such a state, the magnetizer 11 is scanned on the surface of the steel 101 so that the positions of the magnetic pole surfaces of the magnetizer 11 are different. The magnetic flux $\Phi$ at that time is detected by the detection coil 15. As a result, a history curve and others such as a current waveform, a voltage waveform, a magnetic characteristic, and an impedance loop illustrated in FIGS. 2A to 2I are acquired at each measurement position, and feature amounts are obtained. The measured feature amounts are output from the feature amount measuring device 10 to the hardness computing device 20.

In hardness acquiring step S3, feature amount acquiring step S31 and hardness computing step S32 are performed.

In feature amount acquiring step S31, the feature amount acquisition unit 211 acquires a plurality of types of feature amounts at each measurement position from the feature amount measuring device 10. The number of feature amounts at each measurement position acquired from the feature amount measuring device 10 by the feature amount acquisition unit 211 may be one (a single) if the feature amount exhibits a pattern in which the feature amount does not change in response to the change in stress in any hardness. The feature amounts at each measurement position acquired from the feature amount measuring device 10 by the feature amount acquisition unit 211 may have a plurality of types. Note that it is sufficient that the plurality of types of feature amounts acquired here each have a correlative relationship in which the change amount of the feature amount with respect to the change in stress is constant in any hardness. In the first embodiment, for example, the residual magnetic flux density Br and the coercive force Hc are acquired as the feature amounts.

In hardness computing step S32, the hardness Hv is computed on the basis of the plurality of types of feature amounts acquired in feature amount acquiring step S31 and the correlated information corresponding thereto acquired in correlated information storage step S12. Specific examples of computations will be described below.

That is, by substituting expression (5) into $\beta i$ in expression (4), expressions (4) and (5) are expressed as the following expression (6).

$$P_i = \alpha_i \cdot \sigma + a_i \cdot Hv + b_i \cdots\cdots (6)$$

Then, assuming that constants $\alpha_i$, $a_i$, and $b_i$ in one (first) feature amount $P_1$ are $\alpha_1$, $a_1$, and $b_1$, respectively, and constants $\alpha_i$, $a_i$, and $b_i$ in the other (second) feature amount $P_2$ are $\alpha_2$, $a_2$, and $b_2$, respectively, expressions (7) and (8) can be obtained for the acquired Br and Hc.

$$P_1 = \alpha_1 \cdot \sigma + a_1 \cdot Hv + b_1 \cdots\cdots (7)$$

$$P_2 = \alpha_2 \cdot \sigma + a_2 \cdot Hv + b_2 \cdots\cdots (8)$$

Then, the hardness Hv can be obtained by subtracting $\sigma$ from expressions (7) and (8). Note that one or more different feature amounts $P_3$, $P_4$ ... may be further acquired to obtain corresponding relational expressions. In this case, three or more relational expressions can be obtained for two unknowns. Then, by substituting the obtained results of the hardness Hv and the stress σ into three relational expressions and repeatedly performing calculations using the least squares method so as to minimize errors with each feature amount Pi, it is possible to correct the error at the time of measuring each feature amount.

(Hardness computing program)

Next, a hardness computing program of the first embodiment will be described.

The hardness computing program of the first embodiment is a hardness computing program for calculating hardness information that is information regarding hardness at a measurement position on the basis of a detection result including at least one of a current value or a voltage value detected by a detection coil in response to application of a magnetic field to an object to be measured. The hardness computing program is a hardness computing program for causing a computer to function as: a feature amount calculator that calculates one or a plurality of feature amounts that change with respect to the hardness at the measurement position on the basis of a detection result detected in response to application of a first alternating magnetic field having a first frequency and a second alternating magnetic field having a second frequency lower than the first frequency to an object to be measured; and a hardness information means that calculates hardness information on the basis of the calculated feature amounts. This makes it possible to compute the hardness information of the object to be measured with high accuracy.

As described above, according to the hardness computing device 20, the hardness measuring system 1, the hardness computing method, and the hardness computing program of the first embodiment, a plurality of types of feature amounts, each of which is correlated with stress and hardness, are measured, and hardness is obtained on the basis of the feature amounts. As a result, it is possible to obtain the hardness with high accuracy by subtracting the influence of stress. Specifically, for example, by substituting a plurality of types of feature amounts measured by the feature amount measuring device 10 into the corresponding expressions (4) and (5), a plurality of relational expressions in which two of stress and hardness are unknowns can be obtained. Therefore, it is possible to obtain the hardness with high accuracy by subtracting the stress from these relational expressions.

(Second embodiment)

Hereinafter, a second embodiment according to the present invention will be described. Hereinafter, there are cases where portions common to those of the first embodiment are denoted by the same references or description thereof are omitted.

In the second embodiment, similarly to the first embodiment, hardness information is hardness of a surface layer at a measurement position of an object to be measured (for example, the steel 101).

As illustrated in FIG. 1, the hardness computing device 20 of the second embodiment includes, similarly to the first embodiment, the feature amount calculation unit 18 that calculates one or a plurality of feature amounts that change with respect to the hardness at a measurement position on the basis of a detection result detected by the detection coil 15 in response to application of a first alternating magnetic field having a first frequency and a second alternating magnetic field having a second frequency lower than the first frequency to an object to be measured.

As illustrated in FIGS. 4E, 4F, 4G, and 4H, feature amounts each include a dead zone region M (M, M1, or M2) in which a value of the feature amount remains approximately constant with respect to residual stress or residual magnetism at the measurement position.

In the second embodiment, if the feature amount has a dead zone region M in which the change of the feature amount remains approximately constant with respect to at least stress or magnetism, and the stress state (or the magnetic state) of the surface layer of the steel that is an object to be measured is included in the dead zone region M, hardness information can be obtained without being affected by the stress state (or the magnetic state). Here, the dead zone region M in which the feature amount remains approximately constant is not limited to a stress range (or a magnetism range) in which the change of the feature amount with respect to the change in stress or magnetism remains zero. The dead zone region M includes a pattern in which the feature amount changes with respect to the change in stress (or magnetism) within a range that does not affect the measurement of the hardness. A case will be exemplified below in which a feature amount includes a dead zone region with respect to stress and the stress is in the dead zone region.

As illustrated in FIGS. 4E, 4F, 4G, and 4H, the correlative relationship between a feature amount and the hardness at a predetermined stress is expressed by expression (9) as follows.

$$P_i = f_i(Hv) \cdots (9)$$

where

i: a reference indicating the type of feature amount,
$f_i$: a function indicating a correlative relationship,
$P_i$: a feature amount, and
Hv: hardness at each position where the feature amount is measured.

For example, as for the residual magnetic flux density Br, the coercive force He, and the permeability

μ exemplified above as feature amounts, in a case where the hardness and the feature amount exhibit a linear-shaped (linear) correlative relationship, the function that expresses the correlative relationship between the feature amount and the hardness is expressed by the following expression (10).

$$P_i = a_i \cdot Hv + b_i \cdots (10)$$

where

i: a reference indicating the type of feature amount,
$P_i$: a feature amount,
$a_i$, $b_i$: constants obtained for each feature amount, and
Hv: hardness at each position where the feature amount is measured.

Here, assuming that hardness resolution required in the hardness measuring system 1 of the present embodiment is $\Delta Hv(\pm\Delta Hv/2)$, a measurement error $\Delta P$ that is allowed as a feature amount corresponding to the hardness resolution is expressed as the following expression (11) using expression (10).

$$\Delta P_i = a_i \cdot \Delta Hv/2 \cdots (11)$$

Furthermore, assuming that the change rate of the feature amount $P_i$ with respect to the stress in a predetermined stress range is $\alpha_i$, a change range $\Delta\sigma$, which is of the stress (or the magnetism) corresponding to the dead zone region M that is allowed in the stress range and satisfies hardness resolution $\Delta Hv$, is expressed as the following expression (12).

$$\Delta\sigma \leq \Delta P_i/\alpha_i \cdots (12)$$

From the above, in a case where the hardness resolution $\Delta Hv$ is required, when $\Delta\sigma$ is obtained by expressions (11) and (12), and a difference $(\sigma_2-\sigma_1)$ between a lower limit $\sigma_1$ and an upper limit $\sigma_2$ indicating the stress range is equal to or less than $\Delta\sigma$, it can be determined that the predetermined stress range is in a range where the feature amount remains approximately constant with respect to the stress.

Here, the hardness computing device 20 includes a selection unit that selects a feature amount in which residual stress or residual magnetism at a measurement position is in the dead zone region M.

Then, the hardness calculation unit 213 of the control unit 21 included in the hardness computing device 20 calculates hardness information on the basis of the feature amount selected by the selection unit.

In this manner, the hardness computing device 20 according to the second embodiment includes the selection unit that selects a feature amount in which residual stress or residual magnetism at a measurement position is in the dead zone region M. This makes it possible to select a type of feature amount that has a dead zone region M in which a value remains approximately constant with respect to residual stress or residual magnetism, in a predetermined range including residual stress or residual magnetism of the surface layer of the steel 101. Accordingly, it is possible to obtain the hardness with high accuracy from the feature amount selected by the selection unit without depending on the variation in residual stress or residual magnetism in the predetermined range.

By the way, a stress adjusting step may be performed prior to feature amount measuring step S2. In the stress adjusting step, stress is applied to the surface layer of the steel 101 that is an object to be measured to change the stress state. In the stress adjusting step, examples of a method for applying stress to the surface layer of the steel 101 include performing shot blasting on the surface of the surface layer of the steel 101. This makes it possible to apply a large residual compressive stress to the surface layer of the steel 101 as compared with the steel 101 before the stress adjusting step is performed. Alternatively, in a case where the steel 101 before the stress adjusting step is performed has a portion where tensile stress is generated as residual stress and a portion where compressive stress is generated as residual stress, the entire steel 101 can be brought into a state where compressive stress is generated. Note that the method for applying stress to the surface layer of the steel 101 is not limited thereto. Examples of the method include applying thermal stress by heating or cooling and thermally deforming the steel 101 that is fixed at both end portions, and applying tensile stress or compressive stress by applying an external force.

By performing the stress adjusting step in this manner, it is possible to make the stress range used to measure the hardness different for each of the correlative relationships of the feature amounts illustrated in FIGS. 4A to 4H. This makes it possible to set the stress range to an appropriate stress state range with high correlation, and measure the hardness with higher accuracy.

(Third embodiment)

Hereinafter, a third embodiment according to the present invention will be described. Hereinafter, there are cases where portions common to those of the first or second embodiment are denoted by the same references or description thereof are omitted.

In the third embodiment, unlike the first and second embodiments, hardness information is the presence or absence of the change in hardness at a second measurement position with respect to the hardness at a first measurement position.

In FIG. 1, the hardness computing device 20 of the third embodiment includes, similarly to the first and second embodiments, the feature amount calculation unit 18 that calculates one or a plurality of feature amounts that change with respect to the hardness at a measurement position on the basis of a detection result detected by the detection coil 15 in response to application of a first alternating magnetic field having a first frequency and a second alternating magnetic field having a second frequency lower than the first frequency to an object to be measured.

As illustrated in FIGS. 4A to 4H, each feature amount has a correlation change region N (N1, N2) in which the feature amount changes in correlation with each of the hardness and residual stress or residual magnetism, of the object to be measured (steel 101).

Here, in the hardness computing device 20 of the third embodiment, the hardness calculation unit 213 included in the control unit 21 calculates hardness information on the basis of a change tendency of each of a plurality of feature amounts calculated at each of the first measurement position and the second measurement position in the correlation change region N.

Specifically, the plurality of feature amounts calculated by the hardness calculation unit 213 include at least two feature amounts that exhibit the same change tendency with respect to the change in one of stress or hardness, and also exhibit opposite change tendencies with respect to the change in the other of the stress or the hardness.

Then, by comparing measurement results at two measurement positions for a combination of these two types of feature amounts, and paying attention to the combination of the tendencies of the changes, it is possible to determine whether the portion between the two measurement portions is a hardness change portion.

For example, as these two feature amounts, a combination of the maximum magnetization voltage Vmag that exhibits a tendency represented in FIG. 4A and the maximum incremental permeability DZmax that exhibits a tendency represented in FIG. 4B are named.

In this case, the maximum magnetization voltage Vmag and the maximum incremental permeability DZmax are calculated at each of the first measurement position and the second measurement position.

Then, in a case where the maximum magnetization voltage Vmag exhibits a decreasing tendency and the maximum incremental permeability DZmax exhibits an increasing tendency between the first measurement position and the second measurement position, it is possible to determine there is a portion (hardened portion) having high hardness between the first measurement position and the second measurement position, according to a determination table illustrated in FIG. 7C, for example.

Note that the storage unit 23 stores a determination table in which each of a plurality of types of feature amounts measured by the feature amount measuring device 10, information indicating an increasing tendency or a decreasing tendency with respect to an increase in stress, and information indicating an increasing tendency or a decreasing tendency with respect to an increase in hardness are associated with each other. Details of the feature amounts and the determination table will be described below.

As illustrated in FIGS. 4A to 4H, the tendencies of the change of feature amount with respect to the change in stress and hardness, that is, the feature amount exhibits an increasing tendency or a decreasing tendency with respect to the increase in stress and the feature amount exhibits an increasing tendency or a decreasing tendency with respect to the increase in hardness, differ depending on the type of feature amount.

In other words, there is a case where the patterns of the correlative relationships between the feature amounts, stress, and hardness have different relationships for each feature amount. Therefore, it is necessary to confirm the pattern of the correlative relationship between the feature amount, stress, and hardness for each feature amount.

The above content can be summarized as determination tables in which change tendencies (increase or decrease) of stress and hardness are indicated for each combination of increase/decrease of two types of feature amounts, as illustrated in FIGS. 7A to 7D.

FIGS. 7A to 7D are determination tables illustrating relationships between combinations of increase/decrease of two types of feature amounts and a change tendencies (increase or decrease) of stress and hardness. FIG. 7A is a first determination table. FIG. 7B is a second determination table. FIG. 7C is a third determination table. FIG. 7D is a fourth determination table.

Here, a combination of two types of feature amounts representing the correlative relationship between FIGS. 4A and 4C, that is, a case where both feature amounts exhibit the same tendency, that is, a decreasing tendency with respect to an increase in hardness, while the feature amounts exhibit inverse tendencies with respect to an increase in stress, that is, one feature amount exhibits an increasing tendency and the other feature amount exhibits a decreasing tendency, can be organized in the determination table illustrated in FIG. 7B in a range where the feature amounts exhibit similar tendencies. Furthermore, for example, a combination of two types of feature amounts representing the correlative relationship between FIGS. 4A and 4B, that is, a case where the feature amounts exhibit inverse tendencies with respect to an increase in hardness, that is, one feature amount exhibits an increasing tendency and the other feature amount exhibits a decreasing tendency, while both feature amounts exhibit the same tendency, that is, an increasing tendency with respect to an increase in stress, can be organized in the determination table illustrated in FIG. 7C in a range where the feature amounts exhibit similar tendencies. Furthermore, for example, a combination of two types of feature amounts representing the correlative relationship between FIGS. 4C and 4D, that is, a case where the feature amounts exhibit inverse tendencies with respect to an increase in hardness, that is, one feature amount exhibits an increasing tendency and the other feature amount exhibits a decreasing tendency, while both feature amounts exhibit the same tendency, that is, a decreasing tendency with respect to an increase in stress, can be organized in the determination table illustrated in FIG. 7D in a range where the feature amounts exhibit similar tendencies. Note that, although the combination of tendencies regarding hardness and stress in two types of feature amounts is used in the above description, a combination of tendencies regarding hardness and stress in three or more types of feature amounts may be used.

Note that even in a case where the feature amount has a dead zone region M (M1, M2), it is possible to determine whether it is a hardness change portion by comparing measurement results at two measurement positions for a combination of two types of feature amounts exhibiting the same tendency with respect to the change in hardness (one of stress or hardness) and exhibiting inverse tendencies with respect to the change in stress (the other of the stress or the hardness).

For example, the feature amount illustrated in FIG. 4E has the dead zone region M1 and the correlation change region N1. Furthermore, the feature amount illustrated in FIG. 4G has the dead zone region M2 and the correlation change region N2. Here, in the stress range where the correlation change region N1 and the correlation change region N2 overlap, when comparing the two measurement positions, in a case where the hardness increases, the feature amount illustrated in FIG. 4E increases, and the feature amount illustrated in FIG. 4G also increases. Furthermore, in a case where the hardness decreases, the feature amount illustrated in FIG. 4E decreases, and the feature amount illustrated in FIG. 4G also decreases. On the other hand, in a case where the stress increases, one feature amount increases, while the other feature amount decreases. In this manner, it is possible to determine whether it is a hardness change portion, that is, whether it is a portion having high hardness (hardened portion) or a portion having low hardness (softened portion) by comparing measurement results at two measurement positions for a combination of two types of feature amounts exhibiting the same tendency with respect to the change in hardness (one of stress or hardness) and exhibiting inverse tendencies with respect to the change in stress (the other of the stress or the hardness) and paying attention to the combination of the tendencies of the changes.

In this manner, the hardness computing device 20 according to the third embodiment includes the hardness calculation unit 213 that calculates hardness information on the basis of a change tendency of each of a plurality of feature amounts calculated at each of the first measurement position and the second measurement position in the correlation change region N. This makes it possible to obtain the changes in hardness at different measurement positions in the object to be measured from the calculated feature amounts with high accuracy. Accordingly, for example, it is possible to identify an abnormal portion (position) on the basis of the obtained changes in hardness by using a predetermined threshold as a determination reference, and perform processing such as removing the identified abnormal portion.

Furthermore, the hardness calculation unit 213 may have a determination table that defines a combination of change tendencies of stress and hardness for at least two feature amounts and the presence or absence of the change in hardness according to the combination. Then, the hardness calculation unit 213 may be configured to calculate hardness information on the basis of the determination table. This makes it possible to obtain the changes in hardness at different measurement positions in the object to be measured by using the determination table with high accuracy.

The determination table represented by the combination of at least two types of feature amounts as described above can be obtained by preparing standard specimens, of the same kind of steel, having different stress states and hardness in advance, and by measuring the feature amounts for each of the standard specimens (see preparation step S1 in the first embodiment). Note that data corresponding to the determination tables illustrated in FIGS. 7A to 7D may be stored in the storage unit 23.

Next, an example of a functional constitutions of a control unit 31 of the third embodiment will be described.

FIG. 8 is a block diagram illustrating a functional constitutions of the control unit 31 of the third embodiment.

As illustrated in FIG. 8, the control unit 31 includes a feature amount acquisition unit 311, a determination table acquisition unit 312, and a determination unit 313.

The feature amount acquisition unit 311 acquires at least two types of feature amounts output from the feature amount calculation unit 18 for each unit of measurement (for each measurement at the same measurement position) by the feature amount measuring device 10. For example, in the third embodiment, the feature amount acquisition unit 311 acquires the residual magnetic flux density Br and the coercive force He.

The determination table acquisition unit 312 acquires a determination table corresponding to a combination of the types of the feature amounts acquired by the feature amount acquisition unit 311. For example, in the third embodiment, the determination table illustrated in FIG. 7A is acquired.

The determination unit 313 determines whether the hardness has changed, that is, increased or decreased with respect to the measurement position serving as a reference, on the basis of the feature amounts acquired by the feature amount acquisition unit 311 and the determination table acquired corresponding to the types of the feature amounts by the determination table acquisition unit 312. Furthermore, at the same time, the determination unit 313 may determine whether the stress has changed, that is, the stress has increased or decreased with respect to the measurement position serving as a reference. Here, the measurement position serving as a reference may be a reference position defined in advance, or the previous measurement position may always be updated as the reference measurement position.

(Hardness change portion detecting method)

Next, a hardness change portion detecting method of the third embodiment performed by the control unit 31 will be described. FIG. 9 is a flowchart describing the hardness change portion detecting method of the third embodiment.

As illustrated in FIG. 9, the hardness change portion detecting method of the third embodiment includes preparation step S30, feature amount measuring step S40, and determination step S50. Preparation step S30 includes standard specimen measuring step S301 and correlated information storage step S302.

In standard specimen measuring step S301, similarly to the first preparation step in the first and second embodiments, a plurality of standard specimens of the same kind of steel as the steel 101 that is an object to be measured are prepared, each with stress σ and hardness Hv of the surface layer known in advance. These standard specimens are prepared to have different stress σ or hardness Hv.

Then, in the standard specimen measuring step S301, each type of feature amount is measured for the respective surface layers of the prepared standard specimens. The method for measuring feature amounts is the same as feature amount measuring step S2 in the first and second embodiments.

In correlated information storage step S302, a correlative relationship between each feature amount and stress and hardness is acquired on the basis of the feature amounts, the stress, and the hardness of each standard specimen obtained in standard specimen measuring step S301. The correlative relationship is expressed by a set of numerical values in a table format, representing the graphs illustrated in FIGS. 4A to 4H. Then, determination tables as illustrated in FIGS. 7A to 7D are created on the basis of the results of the organized correlative relationships.

In feature amount measuring step S40, similarly to feature amount measuring step S2 in the first and second embodiments, the feature amount measuring device 10 measures feature amounts of the surface layer at each measurement position on the surface of the steel 101.

As illustrated in FIG. 9, in determination step S50, feature amount acquiring step S501, determination table acquiring step S502, and hardness change determination step S503 are performed.

In feature amount acquiring step S501, the feature amount acquisition unit 211 acquires at least two types of feature amounts at each measurement position from the feature amount measuring device 10. In the third embodiment, for example, the residual magnetic flux density Br and the coercive force Hc are acquired as the feature amounts.

In determination table acquiring step S502, the determination table corresponding to a combination of the types of the feature amounts acquired in feature amount acquiring step S501 is acquired from the storage unit 23.

In hardness change determination step S503, whether or not there is a hardness change portion at the measurement position is determined on the basis of the feature amounts acquired in feature amount acquiring step S501, reference values of the feature amounts, the determination table corresponding thereto acquired in determination table acquiring step S502. Note that the reference values of the feature amounts are reference values of the feature amounts of the same type as the feature amounts acquired in feature amount acquiring step S501. Note that the reference values of the feature amounts are acquired in advance. Then, whether the measured feature amounts at the measurement position have increased or decreased with respect to the reference values of the feature amounts is determined. Then, the results of the increase or decrease regarding the two types of feature amounts are applied to the determination table. On the basis of the determination table, whether the hardness has increased or decreased is determined as compared with respect to the hardness of the standard specimen. The reference value of the feature amount has hardness substantially equivalent to that of the hardness change portion. Therefore, by performing the determination described above, whether or not the measured portion is a hardness change portion can be determined.

A case where an object to be detected is a hardened portion and the determination table illustrated in FIG. 7A is used as the determination table will be described. In this case, a standard specimen having hardness equivalent to that of the hardened portion is prepared. Then, the feature amounts acquired in feature amount acquiring step S501 are compared with the measured feature amounts of the standard specimen. In a case where both the feature amounts (1) and (2) have increased as a result of the comparison, the portion having the feature amounts acquired in feature amount acquiring step S501 is determined to be a hardened portion. Similarly, in a case where both the feature amounts (1) and (2) have decreased as a result of the comparison, the portion having the feature amounts acquired in feature amount acquiring step S501 is determined not to be a hardened portion. Note that the same applies to a case where the object to be detected is a softened portion. In this case, a standard specimen having hardness equivalent to that of the softened portion is prepared. Then, the feature amounts acquired in feature amount acquiring step S501 are compared with the feature amounts of the standard specimen. In a case where both the feature amounts (1) and (2) have increased as a result of the comparison, the portion having the feature amounts acquired in feature amount acquiring step S501 is determined not to be a softened portion. Similarly, in a case where both the feature amounts (1) and (2) have decreased as a result of the comparison, the portion having the feature amounts acquired in feature amount acquiring step S501 is not determined to be a softened portion.

Note that, prior to feature amount measuring step S40, various types of feature amounts may be measured for a surface layer of a standard specimen having hardness equivalent to that of the hardness change portion while changing the stress state of the standard specimen. The measured various types of feature amounts may be recorded as various types of reference values.

As described above, according to the hardness computing device 20, the hardness measuring system 1, the hardness change portion detecting method, and the hardness computing program of the third embodiment, two types of feature amounts exhibit the same tendency or different tendencies such as opposite tendencies with respect to the change in stress and the change in hardness, and thus, in the determination step, whether or not the hardness has changed is determined on the basis of either the same tendency or the opposite tendencies by comparing the measurement results measured at the measurement position and the reference values measured in the preparation step. This makes it possible to detect the hardness change portion with high accuracy by subtracting the influence of the change in stress.

(Fourth embodiment)

Hereinafter, a fourth embodiment according to the present invention will be described. Hereinafter, there are cases where portions common to those of the first to third embodiments are denoted by the same references or description thereof are omitted.

In the fourth embodiment, hardness information is information that enables the determination of whether or not the hardness at a measurement position of an object to be measured has hardness within the defined hardness range, for example. Note that the hardness information is not limited to the information that enables the determination of whether or not the hardness at the measurement position of an object to be measured has hardness within the defined hardness range.

Here, machine learning may be used to obtain the correlative relationship between feature amounts and hardness information. The hardness calculation unit 213 (see FIG. 5) calculates hardness information on the basis of measurement values of the feature amounts at a measurement position of an object to be measured by using a trained model that has learned the correlative relationship between the feature amounts and hardness information.

Specifically, the hardness calculation unit 213 includes a training unit (not illustrated) that performs training of a learning model using a combination of feature amounts, which are input samples, and hardness information, which is an output sample, as a training dataset. For example, hardness information serving as an output sample is information that enables the determination of whether or not the hardness at the measurement position of an object to be measured has hardness within the defined hardness range. Note that the training dataset may be stored in the storage unit 23.

The training unit determines whether or not an output value from the learning model matches the output sample. Note that if an error between the output value and the output sample falls within a predetermined value range, it may be determined that the output value matches the output sample. In a case where an output value from the learning model does not match the output sample, the training processing described above is repeated until the output value from the learning model matches the output sample. As a result, the learning model can be optimized, and it is possible to train the learning model and create a trained model. In a case where an output value from the learning model matches the output sample, the hardness calculation unit 213 stores the trained model optimized by training in the storage unit 23, for example.

The trained model learns the correlative relationship between the feature amounts and hardness information. In addition, the trained model is trained to output the hardness information corresponding to the feature amounts when the measured feature amounts at the measurement position of an object to be measured are input thereto. Therefore, when the feature amounts at the measurement position of an object to be measured are input to the trained model, the trained model calculates hardness information at the measurement position of the object to be measured having the feature amounts. This makes it possible to compute the hardness information with higher accuracy.

The embodiments of the present invention have been described in detail with reference to the drawings heretofore. However, the specific constitution is not limited to these embodiments, and includes design changes and the like within the scope not departing from the gist of the present invention.

For example, the feature amount that changes depending on the properties of the surface layer of the steel 101 is not limited to the feature amount of the surface layer of the steel 101. In the embodiments of the present invention, the hardness measuring system 1 is not limited to the case of computing the hardness. For example, the hardness measuring system 1 may measure stress information in addition to hardness information. Furthermore, the hardness measuring system 1 may function as a stress measuring system that measures stress information instead of hardness information.

[Brief Description of the Reference Symbols]

1 Hardness measuring system
10 Feature amount measuring device
11 Magnetizer
12 Oscillator
13 Excitation power supply
14 Magnetic field computing unit
15 Detection coil
16 Magnetic flux density computing unit
17 History curve and others computing unit
18 Feature amount calculation unit
20 Hardness computing device
101 Steel
111 Yoke
111a Core portion
111b Body portion
112 Exciting coil
112H High frequency exciting coil
112L Low frequency exciting coil
213 Hardness calculation unit

**Claims**

1. A hardness computing device that computes hardness information that is information regarding hardness at a measurement position on a basis of a detection result of at least one of a current value or a voltage value detected by a detection coil in response to application of a magnetic field to an object to be measured, the device comprising:

   a feature amount calculation unit that calculates one or a plurality of feature amounts that change with respect to the hardness at the measurement position on a basis of the detection result detected in response to application of a first alternating magnetic field having a first frequency and a second alternating magnetic field having a second frequency lower than the first frequency to the object to be measured; and
   a hardness calculation unit that calculates the hardness information on a basis of one or a plurality of the feature amounts.

2. The hardness computing device according to claim 1, wherein the feature amount is a characteristic value capable of being calculated on a basis of at least one of a current waveform, a voltage waveform, a magnetic characteristic, or an impedance loop.

3. The hardness computing device according to claim 1 or 2, wherein

   the hardness information is hardness of a surface layer at the measurement position of the object to be measured,
the feature amount has a correlation change region in which the feature amount changes in correlation with each of the hardness and residual stress or residual magnetism, of the object to be measured, and
the hardness calculation unit calculates, for each of a plurality of the feature amounts obtained corresponding to a type of the object to be measured in advance, the hardness of the surface layer at the measurement position, on a basis of a correlative relationship between the feature amount, the hardness of the object to be measured, and at least one of the residual stress or the residual magnetism in the correlation change region.

4. The hardness computing device according to claim 1 or 2, wherein

   the hardness information is hardness of a surface layer at the measurement position of the object to be measured, and
   the feature amount further has a dead zone region in which a value of the feature amount remains constant with respect to residual stress or residual magnetism at the measurement position.

5. The hardness computing device according to claim 1 or 2, wherein

   the hardness information is presence or absence of a change in hardness at a second measurement position with respect to hardness at a first measurement position,
   the feature amount has a correlation change region in which the feature amount changes in correlation with each of the hardness and residual stress or residual magnetism, of the object to be measured,
   the hardness calculation unit is configured to calculate the hardness information on a basis of a change tendency of each of a plurality of the feature amounts calculated at each of the first measurement position and the second measurement position in the correlation change region, and
   a plurality of the feature amounts include at least two of the feature amounts exhibiting the same change tendency with respect to a change in one of stress or hardness, and also exhibiting opposite change tendencies with respect to a change in the other of the stress or the hardness.

6. The hardness computing device according to claim 1 or 2, wherein the hardness calculation unit

calculates the hardness information on a basis of a measurement value of the feature amount at the measurement position of the object to be measured by using a trained model that has learned a correlative relationship between the feature amount and the hardness information.

7. The hardness computing device according to any one of claims 1 to 6, wherein the hardness calculation unit calculates the hardness information on a basis of a plurality of the feature amounts and a chemical composition and/or a manufacturing condition of the object to be measured.

8. A hardness measuring system comprising:

   a high frequency magnetic field applicator that applies a first alternating magnetic field having a first frequency to the object to be measured;
   a low frequency magnetic field applicator that applies a second alternating magnetic field having a second frequency lower than the first frequency to the object to be measured;
   a detection coil that detects a magnetic field, from the object to be measured, obtained when each of the first alternating magnetic field and the second alternating magnetic field is applied;
   a detector that detects at least one of a current value or a voltage value flowing through the detection coil; and
   the hardness computing device according to any one of claims 1 to 7.

9. A hardness computing method for calculating hardness information that is information regarding hardness at a measurement position on a basis of a detection result including at least one of a current value or a voltage value detected by a detection coil in response to application of a magnetic field to an object to be measured, the method comprising:

   calculating one or a plurality of feature amounts that change with respect to the hardness at the measurement position on a basis of the detection result detected in response to application of a first alternating magnetic field having a first frequency and a second alternating magnetic field having a second frequency lower than the first frequency to the object to be measured; and
   calculating the hardness information on a basis of one or a plurality of the feature amounts.

10. A hardness computing program for calculating hardness information that is information regarding hardness at a measurement position on a basis of a detection result including at least one of a current value or a voltage value detected by a detection coil in response to application of a magnetic field to an object to be measured,
the program causing a computer to function as:

   a feature amount calculator that calculates one or a plurality of feature amounts that change with respect to the hardness at the measurement position on a basis of the detection result detected in response to application of a first alternating magnetic field having a first frequency and a second alternating magnetic field having a second frequency lower than the first frequency to the object to be measured; and
   a hardness information means that calculates the hardness information on a basis of the feature amount.

FIG. 1

FIG. 2A

FIG. 2B

CURRENT WAVEFORM I

FIG. 2C

VOLTAGE WAVEFORM V

FIG. 2D

ALTERNATING VOLTAGE
(LOW FREQUENCY + HIGH FREQUENCY)

112 (15)

FIG. 2E

$$K = \sqrt{\frac{|A_3|^2 + |A_5|^2 + |A_7|^2}{|A_1|^2}}$$

$A_{3-7}$ : AMPLITUDE NORMALIZED BY FUNDAMENTAL WAVE

FIG. 2F

Im Z

Zmax

Zmin

Re Z

FIG. 2G

FIG. 2H

FIG. 2I

FIG. 3

20

HARDNESS COMPUTING DEVICE

21

CONTROL UNIT

200

PROCESSOR

201

MEMORY

22

OUTPUT UNIT

23

STORAGE UNIT

## FIG. 4A

Vmag
Br

## FIG. 4B

DZmax
DZmean
DZr
Zmean
Zmax

## FIG. 4C

FIG. 4D

FIG. 4E

FIG. 4F

FIG. 4G

FIG. 4H

FIG. 5

FIG. 6

## FIG. 7A

| MEASUREMENT RESULT | FEATURE AMOUNT (1) | FEATURE AMOUNT (2) | STRESS | HARDNESS | DETERMINATION RESULT |
|---|---|---|---|---|---|
| | INCREASE | INCREASE | | INCREASE | |
| | INCREASE | DECREASE | INCREASE | | |
| | 0 | 0 | NO CHANGE | NO CHANGE | |
| | DECREASE | INCREASE | DECREASE | | |
| | DECREASE | DECREASE | | DECREASE | |

## FIG. 7B

| MEASUREMENT RESULT | FEATURE AMOUNT (1) | FEATURE AMOUNT (2) | STRESS | HARDNESS | DETERMINATION RESULT |
|---|---|---|---|---|---|
| | INCREASE | INCREASE | | DECREASE | |
| | INCREASE | DECREASE | INCREASE | | |
| | 0 | 0 | NO CHANGE | NO CHANGE | |
| | DECREASE | INCREASE | DECREASE | | |
| | DECREASE | DECREASE | | INCREASE | |

## FIG. 7C

| MEASUREMENT RESULT | FEATURE AMOUNT (1) | FEATURE AMOUNT (2) | STRESS | HARDNESS | DETERMINATION RESULT |
|---|---|---|---|---|---|
| | INCREASE | INCREASE | INCREASE | | |
| | INCREASE | DECREASE | | DECREASE | |
| | 0 | 0 | NO CHANGE | NO CHANGE | |
| | DECREASE | INCREASE | | INCREASE | |
| | DECREASE | DECREASE | DECREASE | | |

## FIG. 7D

| MEASUREMENT RESULT | FEATURE AMOUNT (1) | FEATURE AMOUNT (2) | STRESS | HARDNESS | DETERMINATION RESULT |
|---|---|---|---|---|---|
| | INCREASE | INCREASE | DECREASE | | |
| | INCREASE | DECREASE | | INCREASE | |
| | 0 | 0 | NO CHANGE | NO CHANGE | |
| | DECREASE | INCREASE | | DECREASE | |
| | DECREASE | DECREASE | INCREASE | | |

FIG. 8

```
                                    ~31

        ┌─────────────────────────────┐
        │                             │
        │         ~311                │
        │  ┌───────────────────────┐  │
        │  │   FEATURE AMOUNT      │  │
        │  │   ACQUISITION        │  │
        │  │      UNIT            │  │
        │  └───────────────────────┘  │
        │                             │
        │         ~312                │
        │  ┌───────────────────────┐  │
        │  │   DETERMINATION      │  │
        │  │      TABLE           │  │
        │  │  ACQUISITION UNIT    │  │
        │  └───────────────────────┘  │
        │                             │
        │         ~313                │
        │  ┌───────────────────────┐  │
        │  │   DETERMINATION      │  │
        │  │      UNIT            │  │
        │  └───────────────────────┘  │
        │                             │
        └─────────────────────────────┘
```

FIG. 9

```
              ┌──────────┐
              │  START   │
              └──────────┘
                   │
                   ▼
        ┌───────────────────────┐
        │  MEASURE STANDARD    │──S301  ┐
        │     SPECIMENS        │        │
        └───────────────────────┘        │
                   │                     ├─ S30
                   ▼                     │
        ┌───────────────────────┐        │
        │   STORE CORRELATED   │──S302  │
        │     INFORMATION      │        ┘
        └───────────────────────┘
                   │
                   ▼
        ┌───────────────────────┐
        │   MEASURE FEATURE    │──S40
        │  AMOUNTS OF OBJECT   │
        │   TO BE MEASURED     │
        └───────────────────────┘
                   │
                   ▼
        ┌───────────────────────┐
        │      ACQUIRE         │──S501  ┐
        │   FEATURE AMOUNTS    │        │
        └───────────────────────┘        │
                   │                     │
                   ▼                     │
        ┌───────────────────────┐        │
        │      ACQUIRE         │──S502  ├─ S50
        │  DETERMINATION TABLE │        │
        └───────────────────────┘        │
                   │                     │
                   ▼                     │
        ┌───────────────────────┐        │
        │  DETERMINE HARDNESS  │──S503  │
        │   CHANGE PORTION     │        ┘
        └───────────────────────┘
                   │
                   ▼
              ┌──────────┐
              │   END    │
              └──────────┘
```

## INTERNATIONAL SEARCH REPORT

International application No.

PCT/JP2021/010947

| A. CLASSIFICATION OF SUBJECT MATTER |
|---|
| G01N 27/80(2006.01)i |
| FI: G01N27/80 |
| According to International Patent Classification (IPC) or to both national classification and IPC |

B. FIELDS SEARCHED

| Minimum documentation searched (classification system followed by classification symbols) |
|---|
| G01N27/72-27/9093, G01R33/00-33/26 |

| Documentation searched other than minimum documentation to the extent that such documents are included in the fields searched |  |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
| |

C. DOCUMENTS CONSIDERED TO BE RELEVANT

| Category* | Citation of document, with indication, where appropriate, of the relevant passages | Relevant to claim No. |
|---|---|---|
| X<br>Y | CN 108872359 A (BEIJING UNIVERSITY OF TECHNOLOGY) 23 November 2018 (2018-11-23) paragraphs [0001], [0005]-[0054], fig. 1-6 | 1-2, 8-10<br>3-7 |
| Y | JP 2010-230485 A (NTN CORP) 14 October 2010 (2010-10-14) paragraphs [0012]-[0013], [0018]-[0019] | 3-5, 7 |
| Y | JP 2012-37412 A (NTN CORP) 23 February 2012 (2012-02-23) paragraph [0002] | 3-5, 7 |
| Y | JP 2008-224494 A (SUMITOMO METAL IND LTD) 25 September 2008 (2008-09-25) paragraph [0005] | 3-5, 7 |
| Y | JP 2019-42807 A (JFE STEEL CORP) 22 March 2019 (2019-03-22) paragraph [0020] | 6 |
| A | CN 110006991 A (BEIJING UNIVERSITY OF TECHNOLOGY) 12 July 2019 (2019-07-12) | 1-10 |

☒ Further documents are listed in the continuation of Box C.　　☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 June 2021 (01.06.2021) | 08 June 2021 (08.06.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2021/010947

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-507220 A (SCANIA CV AB (PUBL)) 19 February 2009 (2009-02-19) | 1-10 |
| A | JP 2004-264176 A (RAILWAY TECHNICAL RES INST) 24 September 2004 (2004-09-24) | 1-10 |
| E, A | JP 2021-43160 A (NIPPON STEEL CORP) 18 March 2021 (2021-03-18) | 1-10 |

Form PCT/ISA/210 (continuation of second sheet) (January 2015)

**INTERNATIONAL SEARCH REPORT**
Information on patent family members

International application No.

PCT/JP2021/010947

| Patent Documents referred in the Report | Publication Date | Patent Family | Publication Date |
|---|---|---|---|
| CN 108872359 A | 23 Nov. 2018 | (Family: none) | |
| JP 2010-230485 A | 14 Oct. 2010 | (Family: none) | |
| JP 2012-37412 A | 23 Feb. 2012 | (Family: none) | |
| JP 2008-224494 A | 25 Sep. 2008 | US 2010/0134099 A1 paragraph [0007] WO 2008/126553 A1 EP 2124043 A1 | |
| JP 2019-42807 A | 22 Mar. 2019 | (Family: none) | |
| CN 110006991 A | 12 Jul. 2019 | (Family: none) | |
| JP 2009-507220 A | 19 Feb. 2009 | US 2008/0238418 A1 WO 2007/030050 A1 KR 10-2008-0053491 A | |
| JP 2004-264176 A | 24 Sep. 2004 | (Family: none) | |
| JP 2021-43160 A | 18 Mar. 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09507570 W